# EUROPEAN PATENT APPLICATION

(11) **EP 4 646 966 A1**
(43) Date of publication of application: **12.11.2025**
(21) Application number: 24174862.3
(22) Date of filing: 08.05.2024
(51) Int. Cl.: A46B 5/02, A46B 17/02

(54) **PERSONAL CARE DEVICE AND SLEEVE FOR A PERSONAL CARE DEVICE**

(71) Applicant: Braun GmbH, 61476 Kronberg im Taunus (DE)
(72) Inventor: LANGHAMMER, Dominik Heinz, 61476 Kronberg (DE); SCHUBERT, Friedrich Thomas, 61476 Kronberg (DE); REUTTER, Ines, 61476 Kronberg (DE); BOSS, Rüdiger, 61476 Kronberg (DE)
(74) Representative: P&G Patent Germany

(57) **Abstract**

The present disclosure is concerned with a sleeve for being attached to a housing of a personal care device, the sleeve having a top end, a bottom end, a longitudinal axis connecting a center of the top end and a center of the bottom end, a button side and a back side opposite the button side, a hollow main body having a button on the button side, the button being arranged for allowing a user to operate a button on the housing of the personal care device in an attached state of the sleeve, and a widened portion arranged proximal the top end, the widened portion at least comprising a projection on the back side that circumferentially extends around the longitudinal axis along an angle of at least 90 degrees, and/or having a first sleeve component being made from a material having a Shore A hardness in the range from Shore A 5 to Shore A 70 and a second sleeve component being made from a material having a Shore D hardness in the range from Shore D 40 to Shore D 100.

## Description

### FIELD OF THE INVENTION

The present disclosure is concerned with a personal care device, a sleeve for a personal care device and with a kit comprising a personal care device and a sleeve.

### BACKGROUND OF THE INVENTION

It is known that a user having a certain restriction of utilizing the hands may experience a difficulty in using a day-to-day device such as a personal care device. This may be due to a reduced grip and/or a reduced gripping force such a user can employ. This may also be due to a reduced mobility of the hands and/or the fingers of the hands.

Thus, it is an object to provide a personal care device that overcomes at least to some extent at least one difficulty a user suffering from such a mentioned disability or limitation may experience when using known personal care devices. It may alternatively or additionally be an object to provide an accessory for a personal care device that overcomes at least to some extent at least one difficulty a user suffering from such a mentioned disability or limitation may experience when using the personal care device without the accessory.

### SUMMARY OF THE INVENTION

In accordance with at least one aspect a personal care device, in particular a toothbrush, is provided that comprises a housing having a top end, a bottom end, a longitudinal axis connecting a center of the top end and a center of the bottom end, a button side and a back side opposite the button side, a gripping area arranged between the top end and the bottom end, the gripping area allowing a user to grasp the personal care device with a hand, at least one button for controlling at least one action of the personal care device, the button being disposed in the gripping area on the button side, and a widened portion arranged proximal the top end, the widened portion at least comprising a projection on the back side that circumferentially extends around the longitudinal axis along an angle of at least about 90 degrees.

In accordance with at least one aspect a sleeve for being attached to a housing of a personal care device, in particular to a housing of a toothbrush, is provided, the sleeve having a top end, a bottom end, a longitudinal axis connecting a center of the top end and a center of the bottom end, a button side and a back side opposite the button side, a hollow main body having a button on the button side, the button being arranged for allowing a user to operate a button on the housing of the personal care device in an attached state of the sleeve, and a widened portion arranged proximal the top end, the widened portion at least comprising a projection on the back side that circumferentially extends around the longitudinal axis along an angle of at least 90 degrees, and/or having a first sleeve component being made from a material having a Shore A hardness in the range from Shore A 5 to Shore A 70 and a second sleeve component being made from a material having a Shore D hardness in the range from Shore D 40 to Shore D 100.

In accordance with at least one aspect a kit is provided that comprises a personal care device and a sleeve as proposed herein.

### BRIEF DESCRIPTION OF THE DRAWINGS

The present disclosure will be further elucidated by a detailed description of example embodiments and with reference to figures. In the figures
- Fig. 1A: is a depiction of an example personal care device realized as an electric toothbrush in accordance with the present disclosure;
- Fig. 1B: is a depiction of an example kit comprising a personal care device and a sleeve in accordance with the present disclosure;
- Fig. 2A: is a side view onto an example sleeve in accordance with the present disclosure;
- Fig. 2B: is a bottom view of the sleeve shown in Fig. 2A;
- Fig. 3A: is a cross-sectional cut through another example sleeve;
- Fig. 3B: is another cross-sectional cut through the sleeve shown in Fig. 3A; and
- Fig. 4: is a perspective view onto a second sleeve component of a sleeve in accordance with the present disclosure.

### DETAILED DESCRIPTION OF THE INVENTION

In the context of the present description "personal care" shall mean the nurture (or care) of the skin and of its adnexa (i.e., hairs and nails) and of the teeth and the oral cavity (including the tongue, the gums etc.), where the aim is on the one hand the prevention of illnesses and the maintenance and strengthening of health and on the other hand the cosmetic treatment and improvement of the appearance of the skin and its adnexa. It shall include the maintenance and strengthening of wellbeing. This includes skin care, hair care, and oral care as well as nail care. This further includes grooming activities such as beard care, shaving, and depilation. A "personal care device" thus means any device for performing such nurturing or grooming activity, e.g. (cosmetic) skin treatment devices such as skin massage devices or skin brushes; wet razors; electric shavers or trimmers; electric epilators; and oral care devices such as manual or electric toothbrushes, (electric) flossers, (electric) irrigators, (electric) tongue cleaners, or (electric) gum massagers. Terms in brackets mean that this is an optional feature. This shall not exclude that the proposed or herein discussed personal care device may have a more pronounced benefit in one or several of these nurturing or device areas than in one or several other of these areas. In the present description, an electric toothbrush was chosen to represent a personal care device. To the extent in which the details are not specific for an electric toothbrush, the proposed technology can be used in any other personal care device.

The present disclosure is concerned with three aspects, namely a personal care device that is primarily equipped with a finger stop that avoids that the fingers holding a housing unintentionally let the housing slip through, with a sleeve for a personal care device having a finger stop and/or a button structure for enabling easier operation of a button of the personal care device, and with a kit comprising a personal care device and a sleeve that is dimensioned for being slid over a housing of the personal care device. In accordance with the first aspect, a personal care device having such a finger stop that is realized as a widened portion that circumferentially extends around a longitudinal axis of the personal care device by at least 90 degrees enables use of the personal care device specifically in case of users having limited hand mobility. In accordance with the second aspect, a sleeve is provided that can, e.g., be additionally bought by a user having limited hand mobility to convert a standard personal care device that has no specific structural features for use by a limited hand mobility user into a personal care device that has such features. In accordance with the third aspect, a kit comprising a personal care device and a sleeve intended for being used with the personal care device directly offers the possibility to convert the personal care device, e.g., in case the limited hand mobility is of a temporal nature or in case more than one person want to use the personal care device.

A personal care device in accordance with the present disclosure comprises a housing that has a top end, a bottom end, a longitudinal axis connecting a center of the top end and a center of the bottom end, a button side and a back side opposite the button side. Further it comprises a gripping area arranged between the top end and the bottom end, the gripping area allowing a user to grasp the personal care handle with a hand. At least one button for controlling at least one action of the personal care device is disposed in the gripping area on the button side and a widened portion is arranged proximal the top end, the widened portion at least comprising a projection on the back side that circumferentially extends around the longitudinal axis along an angle of at least about 90 degrees.

In some examples, the widened portion extends in circumferential direction around the longitudinal axis of the personal care device along an angle of at least about 180 degrees or of at least about 200 degrees or of at least about 220 degrees, or of at least about 240 degrees, or of at least about 260 degrees such as about 270 degrees. This shall not exclude that the widened portion complete extends around the longitudinal axis, i.e., by 360 degrees. An exposed area of the button on the outer surface of the personal care device may be at least 0.8 cm², in particular at least 1.5 cm², and further in particular at least 2.5 cm². The widened portion may be inclined with respect to the longitudinal axis of the personal care device, in particular wherein the inclination angle is at least 10 degrees, further in particular at least 15 degrees. The inclination angle may be in a range of between 5 degrees and 45 degrees.

A sleeve for being attached to a housing of a personal care device has in accordance with the present disclosure a top end, a bottom end, a longitudinal axis connecting a center of the top end and a center of the bottom end, a button side and a back side opposite the button side and it further has a hollow main body. The hollow main body has a button on the button side, the button being arranged for allowing a user to operate a button on the housing of the personal care device in an attached state of the sleeve, and/or a widened portion arranged proximal the top end, the widened portion at least comprising a projection on the back side that circumferentially extends around the longitudinal axis along an angle of at least 90 degrees. To the extend a "button" is mentioned with respect to the sleeve, it is not intended to imply that this is already a button that can control something, but the button of the sleeve shall be arranged to enable control of an action of a personal care device when the sleeve is slid over or attached to the personal care device. E.g., the button on the sleeve may then interact with a button on the personal care device.

Additionally or alternatively, the sleeve has a first sleeve component being made from a material having a Shore A hardness in the range from Shore A 10 to Shore A 70 and a second sleeve component being made from a material having a Shore D hardness in the range from Shore D 40 to Shore D 100.

Everything said herein about the sleeve or the gripping area of the personal care device also holds for the other of the two, if not contradicting. This specifically holds for the materials and dimensions mentioned herein and for the widened portion. E.g., the two-component structure of the sleeve may also be employed in a personal care device.

The first sleeve component may be made from a thermoplastic elastomer having a Shore A hardness in the range of between Shore A 40 and Shore A 70, in particular in a range from Shore A 50 to Shore A 60 and the second sleeve component may be made from a thermoplastic material such as polypropylene having a Shore D hardness in the range of between Shore D 50 and Shore D 90, in particular in a range from Shore D 60 to Shore D 80. Further, the second sleeve component may comprise a button structure, a collar structure that at least partially envelopes the hollow of the hollow main body of the sleeve, and a bar structure connecting the button structure and the collar structure. The first sleeve component may have a reduced thickness around at least a portion of the button structure and bar structure, and, additionally or alternatively, the collar structure may comprise a plurality of ribs so that the collar structure has everywhere a wall thickness that does not exceed beyond a predefined threshold wall thickness value.

The outer surface of at least a portion of at least the first sleeve component may have a texture to enhance the grip. A respective roughened or sticky surface may also be used to enhance the grip. A thermoplastic elastomer may already comprise a respective sticky surface.

A kit in accordance with the present disclosure comprises a personal care device and a sleeve as discussed herein, where the sleeve is arranged for being slid over or attached to a housing of the personal care device. The personal care device may comprise at least one button and the second sleeve component may comprise at least one button structure that is exposed on the outside of the sleeve thus realizing a button of the sleeve, which button of the sleeve is in positional alignment with the button of the personal care device when the sleeve is attached to a housing of the personal care device.

The part of the button structure of the sleeve that is exposed on the outside of the sleeve may be larger in area than the area of the button on the personal care device, in particular the exposed area of the button structure may be at least 0.8 cm², in particular at least 1.5 cm², and further in particular at least 2.5 cm². A large area of the button may support easy haptic identification of the button and may also support an easy operation in contrast to a smaller button area size. Specifically, the button structure may be arranged with a distance to the button of the personal care device, in particular a bar structure being provided at least partially on a backside of the button structure facing the button of the personal care device has a distance to the button of the personal care device, which distance may be in a range of between 0.1 mm and 4.0 mm or in a range of between 0.5 mm and 3.5 mm or in a range of between 1.0 mm and 3.0 mm.

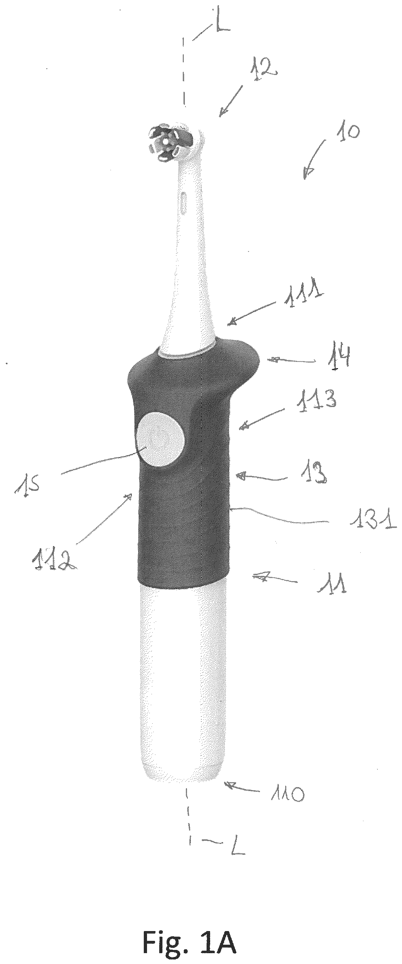

Fig. 1A is a depiction of an example personal care device 10 equipped for use by a user having limited hand mobility. The personal care device 10 is here realized as an electric toothbrush comprising a housing 11 and a repeatedly detachable and attachable head 12 that is realized as a disposable brush head. This shall not exclude that in at least one example the head 12 is non-detachably attached to the housing 11. The housing 11 has a bottom end 110 and a top end 111. The housing 11 extends along a longitudinal axis L that connects a center of the top end 111 and a center of the bottom end 110. The housing 11 comprises a gripping area 13 that may be made from an elastomeric material, e.g., a thermoplastic elastomer (TPE). The gripping area 13 further may have a texture 131 that extends over at least a portion of the outer surface of the gripping area 13. The housing 11 has a front side or button side 112 and an opposite back side 113. The housing 11 also has a widened portion 14 and a button 15, where the button may be made from a material that is harder than the material of the gripping area 13, e.g., a polypropylene or any other suitable thermoplastic material.

The widened portion 14 essentially projects beyond the back side 113 of the housing 11 and here also projects to the sides so that the widened portion 14 effectively works as a finger or hand stopper that shall avoid that the housing 11 slips through the fingers or hand of a user having a limited grip or limited gripping force or limited mobility of the fingers or limited control over the fingers. Seen from the top end, the widened portion circumferentially extends around the longitudinal axis by an angle larger than 90 degrees, which here is about 270 degrees.

The button 15 may project somewhat away from the housing 11 to allow an easy haptic identification of the button area. The button 15 may in particular have an area that is large, e.g., may have an area of at least 0.8 cm² or of at least 1.5 cm² or even at least 2.5 cm². A large button area may support a user having certain limited abilities to use the hand or fingers.

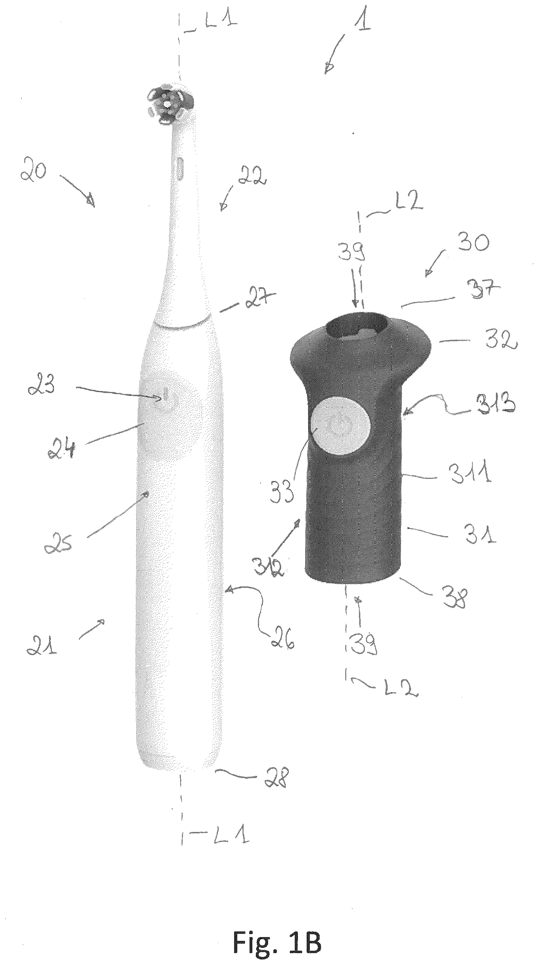

Fig. 1B is a depiction of an example kit comprising a personal care device 20 and a sleeve 30 that is designed for being slid over a housing 21 of the personal care device 20. The personal care device 20 comprises the housing 21 and a replaceable head 22. The housing 21 comprises a button 23 provided on a button side or front side 25 of the housing. The button 23 may be provided within a larger button area 24. The housing 21 further has a top end 27, a bottom end 28, a back side 26 opposite to the front side 25, and a longitudinal axis L1 that connects a center of the top end 27 and a center of the bottom end 28. The sleeve 30 comprises a hollow main body 31 that defines a hollow 39 for receiving a portion of the housing 21 of the personal care device 20, a widened portion 32 and a button 33. The hollow main body 31 has a texture 311 extending over at least over a portion of its outer surface, which texture is intended for enhancing gripping properties of the sleeve 30. Further, the sleeve 30 has a button side or front side 312 and a back side 313, a top end 37, a bottom end 38, and a longitudinal axis L2 that connects a center of the top end 37 with a center of the bottom end 38.

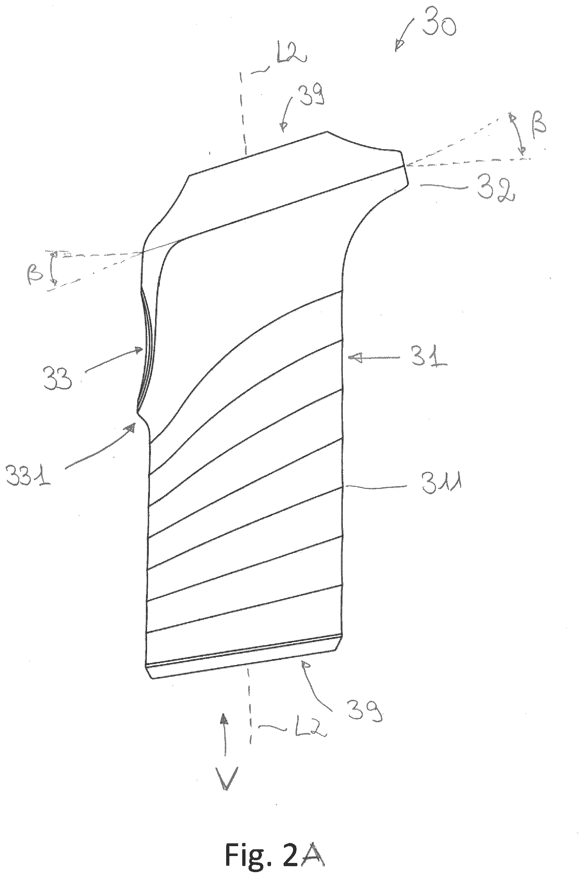

In contrast to the example shown in Fig. 1A, the personal care device 20 and the sleeve 30 are provided as separate units that can be attached to each other, e.g., the sleeve 30 can be slid onto the housing 21. In the shown example, the resulting personal care device would have the same aesthetics as the personal care device 10 shown in Fig. 1A. While it may be envisaged that the sleeve 30 is repeatedly attachable and detachable from the housing 21, this shall not exclude that the sleeve 30 may become non-detachably attached to the housing 21 when being slid over it or that a tool is necessary to detach the sleeve 30 from the housing 21. In contrast to the example of Fig. 1A, where the button 15 was directly used to control an action of the personal care device 10, the example shown in Fig. 1B is somewhat different as in case the sleeve 30 is attached to the housing 21, the button 33 of the sleeve 30 is used to activate the button 23 of the personal care device 20 and thus the button 33 of the sleeve 30 is arranged to be in positional alignment with the button 23 of the personal care device when the sleeve 30 is attached to the personal care device 20. The potential details of a sleeve in accordance with the present disclosure are discussed in connection with Figs. 2A, 2B, 3A, 3B and 4.

Fig. 2A is a side view onto the sleeve 30 shown in Fig. 1B. The hollow main body 31 defines a hollow 39 and comprises a texture 311 on at least a portion of its outer surface. This is just meant to be an example and shall not exclude that the hollow main body 31 may have no such texture. It can be seen that the widened portion 32 is inclined with respect to the longitudinal axis L2. The angle of inclination β may be in a range of between 1 degree to 45 degrees, in particular of between 5 degrees to 30 degrees. An inclination of the widened portion 32 may support the natural shape of a hand of a user. The button 33 is provided in a somewhat outwards projecting button area 331. This may allow an easy haptic identification of the button area 331.

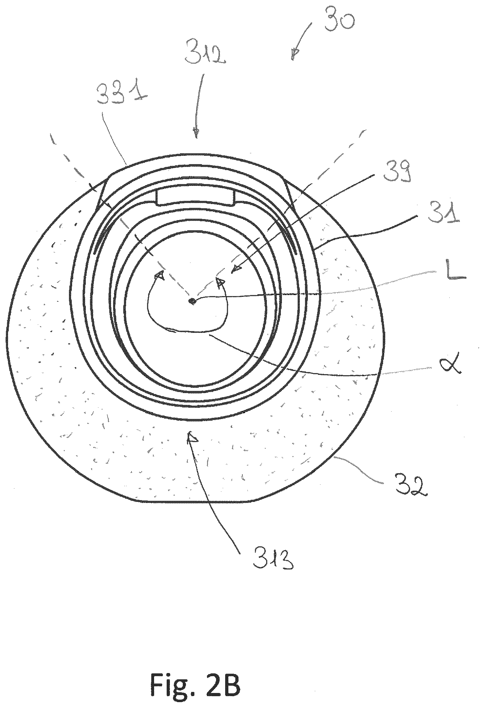

Fig. 2B is a bottom view of the sleeve 30 in viewing direction V as indicated in Fig. 2A. The widened portion 32 is indicated with dots so that it can be identified that the widened portion 32 projects away from a handle portion of the hollow main body 31 and extends circumferentially around the longitudinal axis L2 by an angle α above 90 degrees, which here is about 270 degrees so that the widened portion 32 does not project beyond the hollow main body 31 with respect to the front side 312 and projects the most on the back side 313. On the front side 312 the widened portion 32 transitions into the somewhat forward projecting button area 331.

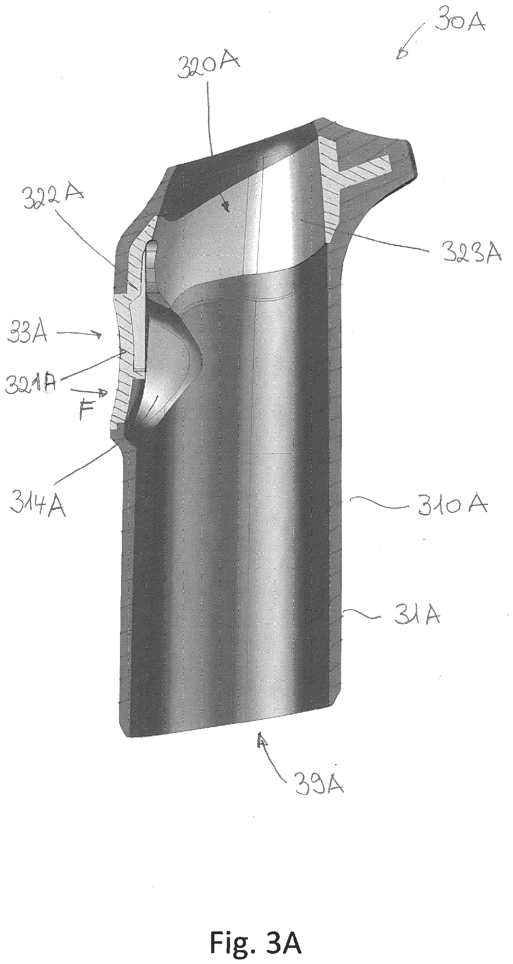

Fig. 3A shows a cross-sectional cut through an example sleeve 30A allowing a side view into a hollow 39A of the sleeve 30A. It can be seen that the sleeve 30A comprises a first handle component 310A and a second handle component 320A. The first handle component 310A here forms the majority of a hollow main body 31A of the sleeve 30A. The first handle component 310A may be made from a material that has a relatively low hardness, e.g., that has a Shore hardness A in the range of between Shore A 10 and Shore A 70, in particular in a range of between Shore A 40 to Shore A 70, and further in particular in a range of between Shore A 50 and Shore A 60. The material of the first handle component 310A may be a thermoplastic elastomer. The second handle component 320A comprises a button structure 321A, a bar structure 322A, and a collar structure 323A. The bar structure 322A connects the button structure 321A with the collar structure 323A so that a force F being applied on a button 33A formed by the second sleeve component 320A causes the bar structure 322A to deform at the relatively rigid collar structure 323A and to allow the button structure 321A to move into the hollow 39A. In order to support the travel of the button structure 321A, a region of reduced wall thickness 314A is provided in the first sleeve component 310A around the button structure 321A.

The second sleeve component may be made from a material that is harder than the first sleeve component 310A, e.g., the material of the second sleeve component 320A may comprise a Shore hardness D in the range of between Shore D 40 and Shore D 95. The material of the second sleeve component 320A may be a thermoplastic material such as a polypropylene. The second handle component may be made by plastic injection molding and may then be inserted into a further mold into which the material of the first handle component is injected to form the final sleeve 30A.

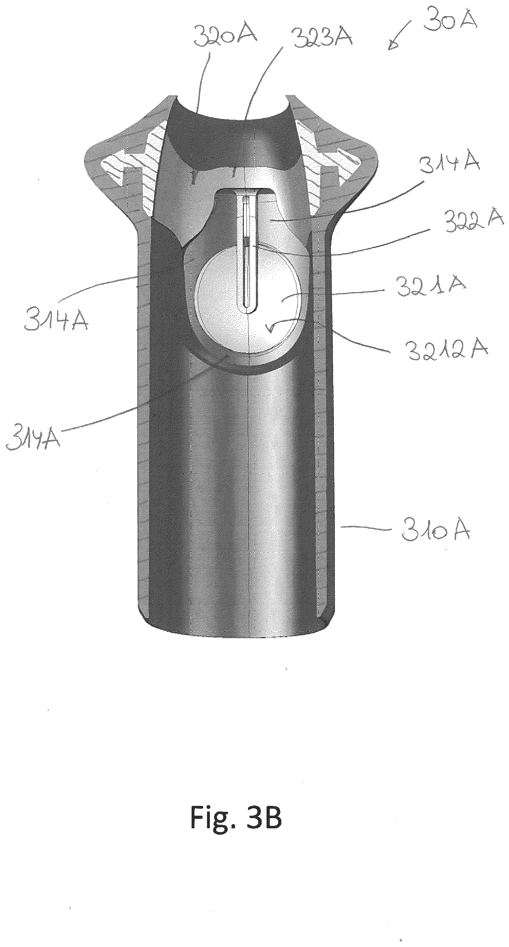

Fig. 3B shows another cross-sectional cut through the sleeve 30A shown in Fig. 3A, allowing a view onto an inner button side of the sleeve 30B. In this view, it can be identified that the area of reduced wall thickness 314A surrounds the button structure 321A and the bar structure 322A. It can also be seen that the bar structure 322A extends partially on a backside surface 3212A of the button structure 321A. While the user has a large area button 33A (see Fig. 3A) that can be operated, the operation of the respective positionally aligned button on the personal care device is affected by the bar structure 322A.

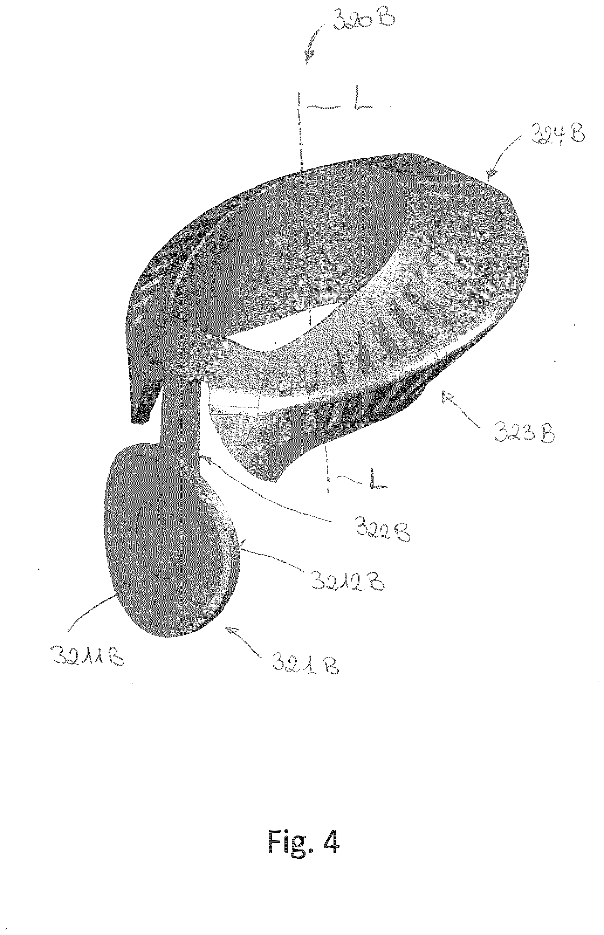

Fig. 4 is a perspective depiction of an example second sleeve component 320B shown in isolation. The second sleeve component 320B comprises a button structure 321B, a bar structure 322B, and a collar structure 323B. The second sleeve component may be made from a thermoplastic material such as polypropylene in a plastic injection molding process. The material from which the second sleeve 322D component is made may have a Shore hardness D in a range of between Shore D 40 and Shore D 100, in particular in a range of between Shore D 50 and Shore D 90, further in particular in a range of between Shore D 60 and Shore D 80. The button structure 321B has in the shown example an outer side surface 3211B with respect to the sleeve is exposed on the outside of the sleeve (see, e.g., Fig. 2). The exposed area of the button structure 321B may be at least 0.8 cm², in particular at least 1.5 cm², and further in particular at least 2.5 cm². The bar structure 322B may be at least partially arranged on a backside surface 3212B of the button structure 321B. The bar structure 322B may, as is shown, connect the button structure 321B with the collar structure 323B. The collar structure is here shown to completely circumferentially extend around a longitudinal axis L, i.e., to span in circumferential direction an angle of 360 degrees. The collar structure 323B may comprise a rib arrangement 324B so that a wall thickness of the collar structure may not be larger than a predetermined threshold wall thickness value such as 2.0 mm or 2.5 mm or 3.0 mm or the like. The collar structure 324B may be completely covered by the first sleeve component on the outer side surface of the sleeve but may at least partially be exposed on the inner side surface of the sleeve. The same holds for the bar structure 322B that may not be exposed on the outer side surface of the sleeve but may be exposed on the inner side surface of the sleeve, specifically as the bar structure 322B extending onto the backside surface 3212B of the button structure 321B may be needed for activation of a button on an outer side surface of a personal care device when the sleeve is slid over a housing of the personal care device, i.e., when the sleeve is attached to the personal care device in the intended manner.

The collar structure 323B may provide an increased stability to the widened portion of the sleeve. For the operation of the button structure 321B in the attached state, the collar structure 323B may be considered as an essentially rigid and fixed wall at which the bar structure 322B is elastically hinged so that a user can depress the button structure 321B against the restoring force of the bar structure 322B.

Shore hardness A or D values provided in the present disclosure are understood to be measured in accordance with DIN ISO 48-4:2021.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A personal care device, in particular a toothbrush, comprising a housing having
a top end, a bottom end, a longitudinal axis connecting a center of the top end and a center of the bottom end, a button side and a back side opposite the button side;
a gripping area arranged between the top end and the bottom end, the gripping area allowing a user to grasp the personal care device with a hand;
at least one button for controlling at least one action of the personal care device, the button being disposed in the gripping area on the button side; and
a widened portion arranged proximal the top end, the widened portion at least comprising a projection on the back side that circumferentially extends around the longitudinal axis along an angle of at least about 90 degrees.

2. The personal care device in accordance with claim 1, wherein the widened portion extends in circumferential direction around the longitudinal axis along an angle of at least about 180 degrees or of at least about 200 degrees or of at least about 220 degrees, or of at least about 240 degrees, or of at least 260 degrees.

3. The personal care device in accordance with claim 1 or claim 2, wherein an exposed area of the button is at least 0.8 cm², in particular at least 1.5 cm², and further in particular at least 2.5 cm².

4. The personal care device in accordance with one of claims 1 to 3, wherein the widened portion is inclined with respect to the longitudinal axis of the personal care device, in particular wherein the inclination angle is at least 10 degrees, further in particular at least 15 degrees.

5. A sleeve for being attached to a housing of a personal care device, in particular for a housing of a toothbrush, the sleeve having
a top end, a bottom end, a longitudinal axis connecting a center of the top end and a center of the bottom end, a button side and a back side opposite the button side;
a hollow main body
(a) having a button on the button side, the button being arranged for allowing a user to operate a button on the housing of the personal care device in an attached state of the sleeve, and a widened portion arranged proximal the top end, the widened portion at least comprising a projection on the back side that circumferentially extends around the longitudinal axis along an angle of at least 90 degrees, and/or
(b) having a first sleeve component being made from a material having a Shore A hardness in the range from Shore A 10 to Shore A 70 and a second sleeve component being made from a material having a Shore D hardness in the range from Shore D 40 to Shore D 100.

6. The sleeve in accordance with claim 5, wherein the first sleeve component is made from a thermoplastic elastomer having a Shore A hardness in the range of between Shore A 40 and Shore A 70, in particular in a range from Shore A 50 to Shore A 60.

7. The sleeve in accordance with either claim 5 or claim 6, wherein the second sleeve component is made from a thermoplastic material such as polypropylene having a Shore D hardness in the range of between Shore D 50 and Shore D 90, in particular in a range from Shore D 60 to Shore D 80.

8. The sleeve in accordance with one of claims 5 to 7, wherein the second sleeve component comprises a button structure, a collar structure that at least partially envelopes the hollow of the hollow main body of the sleeve, and a bar structure connecting the button structure and the collar structure.

9. The sleeve in accordance with the previous claim, the first sleeve component having a reduced thickness around at least a portion of the button structure.

10. The sleeve in accordance with one of claims 5 to 9, wherein the collar structure comprises a plurality of ribs so that the collar structure has a wall thickness that does not exceed beyond a predefined threshold wall thickness value.

11. The sleeve in accordance with one of claims 5 to 10, wherein the outer surface of at least a portion of at least the first sleeve component has a texture.

12. A kit comprising a personal care device and a sleeve in accordance with one of claims 5 to 11, the sleeve being arranged for being slid over a housing of the personal care device.

13. The kit in accordance with the previous claim, wherein the personal care device comprises at least one button and the second sleeve component comprises at least one button structure that is exposed on the outside of the sleeve thus realizing a button of the sleeve, which button of the sleeve is in positional alignment with the button of the personal care device when the sleeve is attached to the housing of the personal care device.

14. The kit in accordance with the previous claim, wherein the part of the button structure of the sleeve that is exposed on the outside of the sleeve is larger in size than the button on the personal care device, in particular where an exposed area of the button structure is at least 0.8 cm², in particular at least 1.5 cm², and further in particular at least 2.5 cm².

15. The kit in accordance with claim 13 or claim 14, wherein the button structure is arranged with a distance to the button of the personal care device, in particular wherein a bar structure being provided at least partially on a backside of the button structure facing the button of the personal care device has a distance to the button of the personal care device, further in particular wherein the distance is in a range of between 0.1 mm and 4.0 mm or in a range of between 0.5 mm and 3.5 mm or in a range of between 1.0 mm and 3.0 mm.
